# EUROPÄISCHE PATENTSCHRIFT

(11) **EP 1 733 926 B1**
(45) Veröffentlichungstag und Bekanntmachung des Hinweises auf die Patenterteilung: **22.03.2017**
(21) Anmeldenummer: 06011454.3
(22) Anmeldetag: 02.06.2006
(51) Int. Cl.: B60R 19/18

(54) **Vorderbau für ein Kraftfahrzeug**
Front structure for a motor vehicle
Structure avant pour véhicule automobile

(30) Priorität: 13.06.2005 DE 102005027178
(43) Veröffentlichungstag der Anmeldung: 20.12.2006
(73) Patentinhaber: GM Global Technology Operations LLC, Detroit, MI 48265-3000 (US)
(72) Erfinder: Sachs, Martin Leonhard, 64342 Seeheim-Jugenheim (DE); Steller, Claus, 64521 Gross-Gerau (DE); Thompson, Grace-Mary, Dr., 65428 Rüsselsheim (DE); Wanke, Thomas, 55239 Gau-Odernheim (DE)
(74) Vertreter: Heuer, Wilhelm

(56) Entgegenhaltungen:
- EP-A- 1 318 323
- WO-A-96/08393
- WO-A-99/41109
- DE-B3- 10 237 454
- US-A- 4 765 665
- US-A- 5 431 464

## Beschreibung

Die Erfindung betrifft einen Vorderbau für ein Kraftfahrzeug mit einem Karosserieteil des Kraftfahrzeuges, mit einem in Fahrtrichtung weisenden Stoßfänger und mit einer Stütze zur Abstützung eines äußeren Schalenteils des Stoßfängers an dem Karosserieteil.

Ein solcher Vorderbau ist beispielsweise aus der EP 1 193 135 A1 bekannt. Bei diesem Vorderbau weist die Stütze eine Reihe von nebeneinander angeordneten Federelementen auf, welche sich an dem äußeren Schalenteil abstützen. Die Federelemente stützen sich an einem Schalenkörper ab. Im Falle eines Aufpralls eines Fußgängers auf den Stoßfänger können die Federelemente begrenzt elastisch nachgeben. Nachteilig bei diesem Vorderbau ist jedoch, dass die Federelemente und der Schalenkörper nur einen sehr kleinen Deformationsweg ermöglichen und zudem das äußere Schalenteil eine weitere Versteifung des Stoßfängers in Fahrtrichtung erzeugt. Zudem überragt das äußere Schalenteil die Federelemente in vertikaler Richtung, so dass der Stoßfänger bei einer Belastung vertikal von oben weicher ist als in Fahrtrichtung. Daher vermag der Stoßfänger vertikal von oben eingeleitete Betriebskräfte nur unzureichend abzustützen. Bei einem Aufprall eines Fußgängers auf den bekannten Vorderbau, insbesondere mit seinem unteren Beinbereich, bietet der Stoßfänger einen hohen Widerstand, was zu einem hohen Verletzungsrisiko des Fußgängers führt.

Weiterhin ist aus der DE 199 12 272 A1 ein Vorderbau für ein Kraftfahrzeug bekannt geworden, bei dem hinter dem äußeren Schalenteil des Stoßfängers eine Distanzkonsole angeordnet ist. Die Distanzkonsole ist mit Abstand zu dem äußeren Schalenteil angeordnet und hat eine Anschlagplatte, auf der das äußere Schalenteil bei einem Aufprall eines Fußgängers auf den Stoßfänger auftrifft. Die Distanzkonsole weist mehrere Abschnitte mit unterschiedlichen Steifigkeiten auf. Nachteilig ist auch bei diesem Vorderbau, dass vertikal von oben in den Stoßfänger eingeleitete Betriebskräfte nur unzureichend abgestützt werden. In Fahrtrichtung weist der Vorderbau jedoch sehr große Abmessungen auf.

Die gattungsgemäße US 5,431,464 offenbart beispielsweise eine deformierbare Stützstruktur, die eine Vielzahl einzelner Halteabschnitte aufweist, die über einzelne Stützen miteinander verbunden sind. Hierbei weist jeder Halteabschnitt einen nach außen vorspringenden Vorsprung auf, an welchem sich ein mittlerer Abschnitt der Stoßfängerverkleidung abstützt.

Die EP 1 318 323 A2 zeigt eine Stützstruktur, welche aus einem oberen Stützprofil gebildet wird, welches sich über in Horizontalrichtung voneinander beabstandete Stützen an einem Querträger abstützt.

Die WO 99/41109 A1 betrifft ferner einen formintegrierten Stoßfänger, welcher aus einem Rückenteil, aus einer vorgewölbten Verkleidung und einem zwischen Rückenteil und Verkleidung einliegenden und beide gegeneinander abstützenden Formstück aus energieverzehrendem Material besteht.

WO 96/08393 A1 offenbart schließlich einen Querträger, an welchem mittels einer spannbaren Schrauben-Mutter-Verbindung eine Stoßfängerverkleidung unmittelbar am frontseitigen Querträger befestigbar ist.

Der Erfindung liegt das Problem zugrunde, einen Vorderbau der eingangs genannten Art so weiterzubilden, dass er vertikale Betriebskräfte zuverlässig abstützt und in Fahrtrichtung einen vorgesehenen Deformationsweg mit geringer Steifigkeit aufweist.

Dieses Problem wird erfindungsgemäß dadurch gelöst, dass das äußere Schalenteil auf der Oberseite der Stütze aufliegt und dass eine in Fahrtrichtung weisende Wandung des äußeren Schalenteils von der Stütze beabstandet ist und dass die Stütze mehrere kastenförmige Vorsprünge aufweist, auf denen jeweils ein Kragträger angeordnet ist, wobei ein horizontal oberer Schenkel des äußeren Schalenteils auf dem Kragträger aufliegt.

Zur weiteren Vereinfachung der Montage des erfindungsgemäßen Vorderbaus trägt es bei, dass die Stütze einen vertikal nach oben weisenden Befestigungsflansch zur Verbindung mit dem Karosserieteil hat. Der Befestigungsflansch kann beispielsweise mit dem Karosserieteil verschraubt oder vernietet sein. Weiterhin kann durch eine entsprechende Festigkeit des Befestigungsflansches sichergestellt werden, dass bei einem starken Aufprall auf den Stoßfänger sich der Befestigungsflansch verformt oder bricht und damit weiterer Deformationsweg des Stoßfängers geschaffen wird.

Zur weiteren Erhöhung der Stabilität des Stoßfängers in vertikaler Richtung trägt es bei, dass der Kragträger die Oberseite eines mit dem Befestigungsflansch der Stütze verbundenen kastenförmigen Vorsprungs bildet.

Durch diese Gestaltung hat der Stoßfänger in Fahrtrichtung eine geringere Steifigkeit als in der vorgesehenen Montagelage vertikal von oben. Daher vermag der erfindungsgemäße Vorderbau vertikal von oben in den Stoßfänger eingeleitete Betriebskräfte zuverlässig abzustützen. Die Stabilität des Stoßfängers in Fahrtrichtung lässt sich dank der Erfindung unabhängig von der Stabilität der Stütze festlegen, weil die Stütze von der in Fahrtrichtung weisenden Wandung des äußeren Schalenteils beabstandet ist. Damit weist der Stoßfänger zwischen der in Fahrtrichtung weisenden Wandung des äußeren Schalenteils und der Stütze eine Verformungszone auf, in der sich das äußere Schalenteil bereits bei geringen Belastungen verformen kann. Erst wenn das äußere Schalenteil um die Verformungszone gestaucht wurde, wird die in Fahrtrichtung weisende Wandung des Schalenteils von der Stütze abgestützt.

Die Bemessung des Verhältnisses der Steifigkeit des Stoßfängers in Fahrtrichtung und vertikal von oben gestaltet sich gemäß einer vorteilhaften Weiterbildung der Erfindung konstruktiv besonders einfach, wenn die Stütze einen Kragträger hat und wenn ein horizontaler oberer Schenkel des äußeren Schalenteils auf dem Kragträger aufliegt. Durch diese Gestaltung werden vertikal von oben in das äußere Schalenteil eingeleitete Kräfte unmittelbar von dem Kragträger abgestützt. Daher weist der Stoßfänger in dieser Richtung eine hohe Stabilität auf. In Fahrtrichtung des Kraftfahrzeuges unterbleibt die Unterstützung des äußeren Schalenteils durch die Stütze, so dass der Stoßfänger in dieser Richtung eine geringe Steifigkeit aufweist.

Hohe Belastungen des äußeren Schalenteils bei einer vertikalen Belastung von oben lassen sich gemäß einer anderen vorteilhaften Weiterbildung der Erfindung einfach vermeiden, wenn der Kragträger bis über den mittleren Bereich des horizontalen Schenkels des äußeren Schalenteils geführt ist.

Die Montage des erfindungsgemäßen Vorderbaus gestaltet sich besonders einfach, wenn der Kragträger mit dem äußeren Schalenteil verrastet ist.

Die Abstützung des äußeren Schalenteils des Stoßfängers in vertikaler Richtung erfolgt gemäß einer anderen vorteilhaften Weiterbildung der Erfindung an mehreren Stellen, wenn die Stütze mehrere kastenförmige Vorsprünge aufweist.

Eine Nachgiebigkeit des äußeren Schalenteils über die gesamte Höhe des Stoßfängers lässt sich gemäß einer anderen vorteilhaften Weiterbildung der Erfindung einfach gewährleisten, wenn die Stütze das äußere Schalenteil ausschließlich im vertikal oberen Bereich abstützt.

Ein baulicher Aufwand für eine neben der Stütze angeordnete, zusätzliche Abstützung des äußeren Schalenteils erfordert gemäß einer anderen vorteilhaften Weiterbildung der Erfindung einen besonders geringen baulichen Aufwand, wenn zwischen dem Karosserieteil und dem äußeren Schalenteil ein Dämpfungselement angeordnet ist.

Eine einfache Auslegung der Stabilität über die gesamte Höhe des Stoßfängers wird gemäß einer anderen vorteilhaften Weiterbildung der Erfindung einfach ermöglicht, wenn das Dämpfungselement im Wesentlichen unterhalb der Stütze angeordnet ist.

Der erfindungsgemäße Vorderbau gestaltet sich besonders kostengünstig, wenn das Dämpfungselement aus Kunststoffschaum gefertigt ist.

Die Abstützung des äußeren Schalenteils von der Stütze und dem Dämpfungselement ermöglicht gemäß einer anderen vorteilhaften Weiterbildung der Erfindung einen großen Deformationsweg, wenn das untere Ende eines vertikalen Schenkels des äußeren Schalenteils an dem Dämpfungselement anliegt.

Die Erfindung lässt verschiedene Ausführungsformen zu. Zur weiteren Verdeutlichung ihres Grundprinzips ist eine davon in der Zeichnung dargestellt und wird nachfolgend beschrieben. Die Zeichnung zeigt in
- Fig. 1: perspektivisch ein Kraftfahrzeug mit einem erfindungsgemäßen Vorderbau,
- Fig. 2: eine Schnittdarstellung durch den Vorderbau aus Figur 1 entlang der Linie II - II,
- Fig. 3: perspektivisch Bauteile des erfindungsgemäßen Vorderbaus unterhalb eines äußeren Schalenteils,

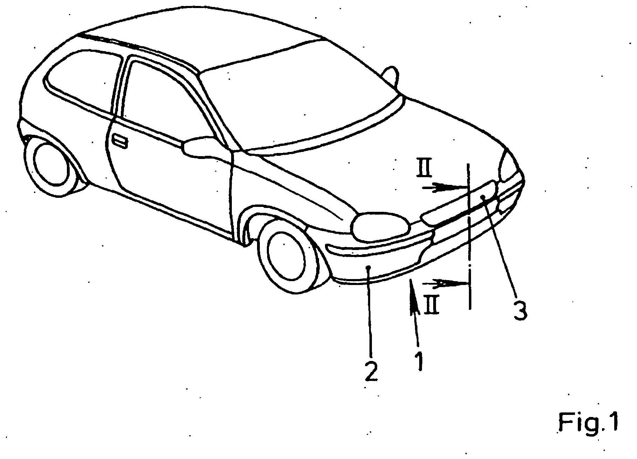

Figur 1 zeigt ein Kraftfahrzeug mit einem in Fahrtrichtung weisenden Vorderbau 1 mit einem Stoßfänger 2. Der Stoßfänger 2 grenzt im mittleren Bereich an einen Kühlergrill 3.

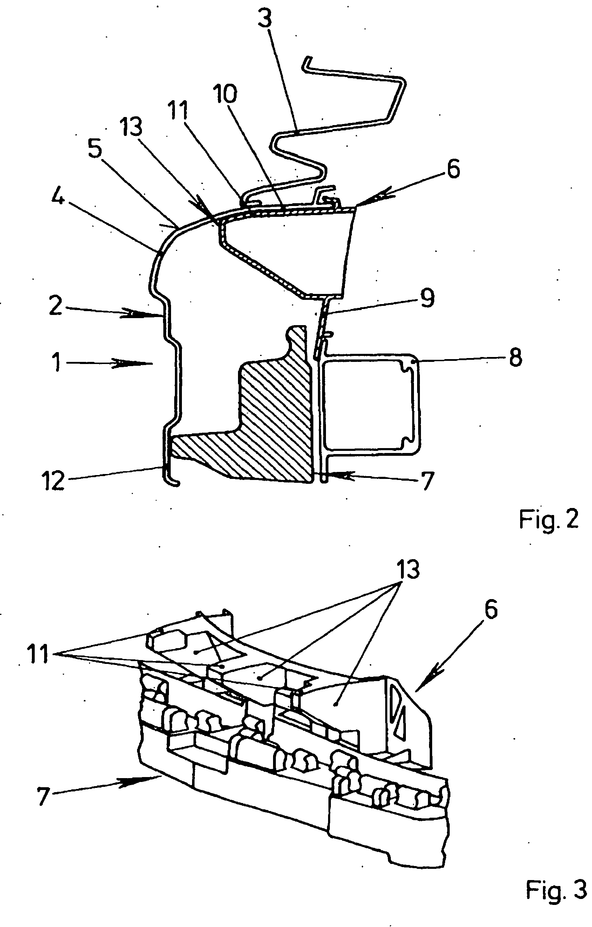

Figur 2 zeigt den Vorderbau des Kraftfahrzeuges aus Figur 1 in einer Schnittdarstellung entlang der Linie II - II. Der Stoßfänger 2 weist ein äußeres Schalenteil 4 mit einer Außenhaut 5 auf. Unterhalb des äußeren Schalenteils 4 sind eine Stütze 6 und ein Dämpfungselement 7 angeordnet. Weiterhin ist zu erkennen, dass sich die Stütze 6 und das Dämpfungselement 7 an einem als Querträger ausgebildeten Karosserieteil 8 abstützen. Oberhalb des äußeren Schalenteils 4 schließt sich der Kühlergrill 3 an.

Die Stütze 6 hat einen vertikalen Befestigungsflansch 9 zur Befestigung an dem Karosserieteil 8 des Kraftfahrzeuges. Das äußere Schalenteil 4 liegt mit einem horizontalen Schenkel 10 auf einem Kragträger 11 der Stütze 6 auf, wobei der Kragträger 11 ausschließlich bis zu dem mittleren Bereich des horizontalen Schenkels 10 des äußeren Schalenteils 4 geführt ist. Das freie Ende des horizontalen Schenkels 10 ist mit dem Kragträger 11 verrastet. Das Dämpfungselement 7 ist zwischen dem äußeren Schalenteil 4 und dem Karosserieteil 8 angeordnet und stützt ein unteres Ende eines vertikalen Schenkels 12 des äußeren Schalenteils 4 ab. Der Kragträger 11 bildet die Oberseite eines von dem Befestigungsflansch 9 gehaltenen kastenförmigen Vorsprungs 13 der Stütze 6.

Im Bereich zwischen dem Dämpfungselement 7, welches das äußere Schalenteil 4 an der unteren Begrenzung abstützt und der Stütze 6, welche das äußere Schalenteil 4 vertikal an der oberen Begrenzung abstützt, hat das Schalenteil 4 keine Unterstützung. Damit hat das äußere Schalenteil 4 einen Deformationsraum, in dem es sich bei einer Belastung in und gegen die Fahrtrichtung verformen kann. Einem Aufprall eines Fußgängers, insbesondere im unteren Beinbereich auf den Stoßfänger 2 setzt das Schalenteil 4 zudem nur einen geringen Widerstand entgegen, da die Stütze 6 nur bis in den mittleren Bereich des horizontalen Schenkels 10 des äußeren Schalenteils 4 geführt ist. Bei einem starken Aufprall verformt sich zudem das Dämpfungselement 7 und der Befestigungsflansch 9 der Stütze 6. Der Befestigungsflansch 9 der Stütze 6 kann bei einem besonders starken Aufprall zudem von dem Karosserieteil 8 getrennt werden. Damit steht weiterer Deformationsraum zur Verfügung. In vertikaler Richtung von oben weist die Stütze 6 jedoch eine hohe Stabilität auf und vermag in das Schalenteil 4 einwirkende Betriebskräfte zuverlässig abzustützen. Damit wird der Stoßfänger 2 während des Betriebes des Kraftfahrzeuges zuverlässig in seiner Lage und Form gehalten.

Figur 3 verdeutlicht die Anordnung der Stütze 6 und des Dämpfungselementes 7 unterhalb des in Figur 2 dargestellten äußeren Schalenteils in einer perspektivischen Ansicht. Hierbei ist zu erkennen, dass die Stütze 6 mehrere kastenförmige Vorsprünge 13, auf denen jeweils ein Kragträger angeordnet ist, aufweist. Das Dämpfungselement 7 ist aus Kunststoffschaum gefertigt und stützt das in Figur 2 dargestellte äußere Schalenteil an mehreren Stellen ab.

## Patentansprüche

1. Vorderbau für ein Kraftfahrzeug mit einem Karosserieteil (8) des Kraftfahrzeuges, mit einem in Fahrtrichtung weisenden Stoßfänger (2), der ein äußeres Schalenteil (4) aufweist, mit einem Dämpfungselement (7) und mit einer Stütze (6) zur Abstützung des äußeren Schalenteils (4) des Stoßfängers (2) an dem Karosserieteil (8),
wobei das äußere Schalenteil (4) auf der Oberseite der Stütze (6) aufliegt und eine in Fahrtrichtung weisende Wandung des äußeren Schalenteils (4) von der Stütze beabstandet ist,
wobei die Stütze (6) mehrere kastenförmige Vorsprünge (13), auf denen jeweils ein Kragträger (11) angeordnet ist, und einen vertikalen Befestigungsflansch (9) zur Befestigung an dem Karosserieteil (8) aufweist,
wobei ein eine obere Begrenzung des äußeren Schalenteils (4) bildender horizontaler Schenkel (10) auf dem Kragträger (11) aufliegt,
wobei das Dämpfungselement (7) zwischen dem Karosserieteil und dem äußeren Schalenteil (4) angeordnet ist und ein unteres Ende eines eine untere Begrenzung des äußeren Schalenteils (4) bildenden vertikalen Schenkels (12) abstützt, wobei ein Deformationsraum, in den das Schalenteil (4) bei einer Belastung in und gegen die Fahrtrichtung verformbar ist, in einem Bereich zwischen der Stütze (6) und dem Dämpfungselement (7), wo das Schalenteil (4) keine Unterstützung hat, vorgesehen ist,
**dadurch gekennzeichnet, dass**
das Schalenteil (4) einem Aufprall eines Fußgängers auf den Stoßfänger (2) im unteren Beinbereich nur einen geringen Widerstand entgegensetzt, da die Stütze nur bis in den mittleren Bereich des horizontalen Schenkels (10) des äußeren Schalenteils (4) geführt ist,
bei einem starken Aufprall zudem das Dämpfungselement (7) und der Befestigungsflansch (9) der Stütze (6) verformt werden,
und bei einem besonders starken Aufprall zudem der Befestigungsflansch (9) vom Karosserieteil (8) getrennt wird, um weiteren Deformationsraum zur Verfügung zu stellen.

2. Vorderbau nach zumindest einem der vorhergehenden Ansprüche, **dadurch gekennzeichnet, dass** der Kragträger (11) mit dem äußeren Schalenteil (4) verrastet ist.

3. Vorderbau nach zumindest einem der vorhergehenden Ansprüche, **dadurch gekennzeichnet, dass** die Stütze (6) das äußere Schalenteil (4) ausschließlich im vertikal oberen Bereich abstützt.

4. Vorderbau nach zumindest einem der vorhergehenden Ansprüche, **dadurch gekennzeichnet, dass** das Dämpfungselement (7) aus Kunststoffschaum gefertigt ist.

## Claims

1. A front structure for a motor vehicle comprising a vehicle body part (8) of the motor vehicle, a bumper (2) facing in the travel direction, which has an outer shell part (4), a damping element (7), and a support (6) for supporting the outer shell part (4) of the bumper (2) on the vehicle body part (8),
wherein the outer shell part (4) rests on the upper side of the support (6) and a wall of the outer shell part (4) facing in the travel direction is spaced apart from the support,
wherein the support (6) has a plurality of box-shaped projections (13), on each of which a cantilever beam (11) is arranged, and a vertical fastening flange (9) for fastening on the vehicle body part (8),
wherein a horizontal leg (10), which forms an upper delimitation of the outer shell part (4), rests on the cantilever beam (11),
wherein the damping element (7) is arranged between the vehicle body part and the outer shell part (4) and supports a lower end of a vertical leg (12), which forms a lower delimitation of the outer shell part (4),
wherein a deformation space, into which the shell part (4) is deformable in the event of a load in and opposite to the travel direction, is provided in a region between the support (6) and the damping element (7), where the shell part (4) has no support,
**characterized in that** the shell part (4) only opposes an impact of a pedestrian on the bumper (2) in the lower leg region with a slight resistance, because the support is only led up into the middle region of the horizontal leg (10) of the outer shell part (4),
in the event of a strong impact, the damping element (7) and the fastening flange (9) of the support (6) are additionally deformed,
and in the event of a particularly strong impact, the fastening flange (9) is additionally separated from the vehicle body part (8), to provide further deformation space.

2. The front structure according to at least one of the preceding claims, **characterized in that** the cantilever beam (11) is interlocked with the outer shell part (4).

3. The front structure according to at least one of the preceding claims, **characterized in that** the support (6) supports the outer shell part (4) exclusively in the vertical upper region.

4. The front structure according to at least one of the preceding claims, **characterized in that** the damping element (7) is manufactured from plastic foam.

## Revendications

1. Avant-corps pour un véhicule à moteur avec une partie de carrosserie (8) du véhicule à moteur, avec un pare-chocs (2) tourné dans le sens de la marche qui comporte une partie en coque extérieure (4), avec un élément amortisseur (7) et avec un support (6) pour supporter la partie en coque extérieure (4) du pare-chocs (2) sur la partie de carrosserie (8),
dans lequel la partie en coque extérieure (4) repose sur la face supérieure du support (6) et une paroi de la partie en coque extérieure (4) tournée dans le sens de la marche est éloignée du support,
dans lequel le support (6) présente plusieurs saillies (13) en forme de caissons, dont chacune porte un support en console (11), et une bride de fixation (9) verticale pour la fixation sur la partie de carrosserie (8),
dans lequel un bras horizontal (10) formant une délimitation supérieure de la partie en coque extérieure (4) repose sur le support en console (11),
dans lequel l'élément amortisseur (7) est disposé entre la partie de carrosserie et la partie en coque extérieure (4) et supporte une extrémité inférieure d'un bras vertical (12) formant une délimitation inférieure de la partie en coque extérieure (4),
dans lequel est prévu un espace de déformation dans lequel la partie en coque (4) peut se déformer en cas de contrainte en sens de la marche et en sens inverse du sens de la marche,
dans une zone comprise entre le support (6) et l'élément amortisseur (7) où la partie en coque (4) n'est pas soutenue,
**caractérisé en ce que** la partie en coque (4) n'oppose qu'une faible résistance à l'impact d'un piéton sur le pare-chocs (2) au niveau des jambes car le support ne s'étend que jusqu'à la partie médiane du bras horizontal (10) de la partie en coque extérieure (4),
et l'élément amortisseur (7) et la bride de fixation (9) du support (6) sont en outre déformés en cas d'impact violent,
et en cas d'impact particulièrement violent, la bride de fixation (9) se détache en outre de la partie de carrosserie (8) afin de créer un espace de déformation supplémentaire.

2. Avant-corps selon l'une au moins des revendications précédentes, **caractérisé en ce que** le support en console (11) est enclenché sur la partie en coque extérieure (4).

3. Avant-corps selon l'une au moins des revendications précédentes, **caractérisé en ce que** le support (6) soutient la partie en coque extérieure (4) uniquement dans la zone supérieure dans le sens vertical.

4. Avant-corps selon l'une au moins des revendications précédentes, **caractérisé en ce que** l'élément amortisseur (7) est fait de mousse synthétique.
